# EUROPEAN PATENT APPLICATION

(11) **EP 2 902 755 A1**
(43) Date of publication of application: **05.08.2015**
(21) Application number: 13838455.7
(22) Date of filing: 19.09.2013
(51) Int. Cl.: G01J 1/02, G01N 21/35

(54) **TERAHERTZ-WAVE DETECTION ELEMENT, PRODUCTION METHOD THEREFOR, JOINED BODY, AND OBSERVATION DEVICE**

(30) Priority: 24.09.2012 JP 2012209539
(71) Applicant: NGK Insulators, Ltd., Nagoya-shi, Aichi 467-8530 (JP)
(72) Inventor: KONDO, Jungo, Nagoya-shi, Aichi 467-8530 (JP); IWATA, Yuichi, Nagoya-shi, Aichi 467-8530 (JP); EJIRI, Tetsuya, Nagoya-shi, Aichi 467-8530 (JP)
(74) Representative: TBK
(86) International application number: PCT/JP2013/075273
(87) International publication number: WO 2014/046170

(57) **Abstract**

The present invention stably provides a terahertz-wave detection element in which the occurrence of warping and a crack is suitably suppressed. The terahertz-wave detection element can detect a spatial intensity distribution that an incident terahertz wave has. The terahertz-wave detection element includes: an electro-optic crystal layer of a thickness 1 µm to 10 µm consisting of an electro-optic crystal in which a refractive index at an incident position of the terahertz wave changes in accordance with incident intensity; a supporting substrate that supports the electro-optic crystal layer; a resin layer of a thickness 1nm to 50nm that joins the electro-optic crystal layer and the supporting substrate together; and a total reflection layer formed on a surface of the electro-optic crystal, consisting of a first dielectric multilayer film and having a thickness equal to or larger than 1 µm. The terahertz-wave detection element is configured to detect a spatial-characteristics distribution which is generated in probe light irradiated to the electro-optic crystal layer in superposition with the terahertz wave and which corresponds to a spatial distribution of a refractive index generated in the electro-optic crystal layer by the incidence of the terahertz wave, thereby to detect the spatial intensity distribution of the incident terahertz wave. A ratio of a thickness of the resin layer to a thickness of the total reflection layer is set equal to or smaller than 1/3.

## Description

### Technical Field

The present invention relates to an element used for detecting a terahertz wave by utilizing an electro-optic effect, and particularly relates to a terahertz-wave detection element used in an observation apparatus utilizing the terahertz wave.

### Background Art

The present invention relates to an element used for detecting a terahertz wave by utilizing an electro-optic effect, and particularly relates to a terahertz-wave detection element used in an observation apparatus utilizing the terahertz wave.

The terahertz wave is generally an electromagnetic wave of a frequency from 0.1 THz to 30 THz. The terahertz wave is expected to be developed from the basic science field such as physical property, electron spectroscopy, life science, chemistry, pharmaceutical science, and the like to the application field such as atmospheric environmental measurement, security, material inspection, food inspection, communication, and the like.

For example, there have been expected applications of the terahertz wave to an image diagnosis apparatus which non-destructively diagnoses (inspects) an object in order to utilize characteristics that photon energy is small and the frequency is higher than that of a microwave and a millimeter wave. Particularly, because its wavelength range includes an absorption wavelength peculiar to a constitutive substance of a biological cell, there have been expected applications of the terahertz wave to an apparatus that can inspect and observe the biological cell in real time. Conventionally, inspection and observation of the biological cell cannot be performed without dyeing with a pigment. Therefore, it has taken time and labor for the inspection and the observation. For example, there is already publicly known an apparatus that can observe by utilizing the terahertz wave, a cell sample which it is difficult to observe by visible light (refer to Patent Document 1, for example).

In the apparatus disclosed in Patent Document 1, an electro-optic single crystal is used as a detection element of the terahertz wave. Specifically, there is used a characteristic of an electro-optic single crystal that a refractive index changes in accordance with the intensity of an incident terahertz wave. The change in the refractive index can be detected as a change in a phase, polarization, and intensity (a light quantity) of light, when the light such as infrared light (referred to as detection light, probe light, and the like) is irradiated in superposition to an electro-optic single crystal to which the terahertz wave is being irradiated. In the apparatus disclosed in Patent Document 1, a terahertz wave having a spatial distribution generated in the intensity (spatially modulated intensity) due to transmission through a specimen is incident to the electro-optic crystal. A spatial distribution of a refractive index change generated in the electro-optic single crystal in accordance with the intensity distribution is read as a light quantity distribution of near-infrared light. By this arrangement, the specimen can be observed.

In an observation apparatus that performs observation based on this principle, in order to obtain high spatial resolution, it is required to thin the electro-optic crystal as much as possible such that the terahertz wave transmitted through the specimen does not spread due to the influence of diffraction. In Patent Document 1, there is also disclosed a terahertz-wave detection element in which the electro-optic crystal is supported by a reinforcing member, by having the electro-optic crystal itself formed extremely thin.

On the other hand, there is also already publicly known a terahertz electromagnetic wave detector that uses a ZnTe crystal of a thickness equal to or larger than 5 µm and equal to or smaller than 100 µm as the electro-optic crystal, in order to reduce the influence of a multiple reflection and expand a measurable terahertz band (refer to Patent Document 2, for example). According to a technique disclosed in Patent Document 2, a ZnTe crystal is also used in a supporting substrate that supports the electro-optic crystal, and both crystals are joined together by thermocompression.

Further, there is also already publicly known an adhered body having a lithium niobate single crystal or a lithium tantalate single crystal as the electro-optic crystal equal to or larger than 0.1 µm and equal to or smaller than 10 µm and having a supporting substrate adhered thereto by a resin having a fluorene skeleton(refer to Patent Document 3, for example).

As described above, in order to obtain high spatial resolution in the observation apparatus using the terahertz wave, it is required to thin the electro-optic crystal used for detection. In order to realize this, a terahertz-wave detection element is usually manufactured by thinning an electro-optic crystal after the electro-optic crystal and a supporting substrate are joined by thermocompression disclosed in Patent Document 2 or by a method of resin adhesion disclosed in Patent Document 3.

In describing in more in detail, the terahertz-wave detection element is generally formed in a relatively small size of about a few mm square to a few cm square in a planar view. Therefore, as described above, in order to improve manufacturing efficiency and secure accuracy of thinning the layer, the terahertz-wave detection element having the thin-layer electro-optic crystal is usually obtained by performing what is called a multi-piece forming as follows. The electro-optic crystal and the supporting substrate are respectively prepared as large-size mother substrates. Both mother substrates are joined together to obtain a joined body. The electro-optic crystal is thinned by mechanical polishing and the like. Finally, the joined body is cut into elements (chips) of desired sizes. Further, a film formation processing (a coating processing) in the case of providing a total reflection film and a reflection prevention film on the front and back surfaces of the detection element in order to improve detection efficiency is also usually performed to the mother substrates.

Moreover, in order to realize high spatial resolution, the terahertz-wave detection element needs to have excellent flatness and excellent parallelism. That is, it is necessary that the terahertz-wave detection element has small warping and small surface unevenness. When the flatness and parallelism of the terahertz-wave detection element used in the observation apparatus are poor, there occurs a phenomenon that an observation image is degraded or blurred, and satisfactory observation cannot be performed.

In the case of providing a total reflection film and a reflection prevention film on the front and back surfaces of the detection element, the joined body is not directly heated in itself but is heated by the atmosphere, because of the atmosphere at the film formation becomes 100°C or above. Accordingly, there is a case where warping occurs in the heated joined body by stress (thermal stress) attributable to a difference in the coefficient of thermal expansion between the mother substrate of the electro-optic crystal and the supporting substrate or an adhesion layer (a resin layer). Consequently, there is a case where the above flatness is not satisfied after the film formation although the flatness was satisfied before the film formation, and the thickness of the total reflection film and the thickness of the reflection prevention film become different at a center part and an outer peripheral part.

In this case, there occurs a variation in the thickness of reflection prevention film in individual terahertz-wave detection elements obtained by dividing the joined body. Consequently, a variation occurs in the intensity of detection light among the elements, and further, a variation also occurs in the spatial resolution. That is, there arises a problem that a variation occurs in the quality of the terahertz-wave detection element.

Further, in the case of the thermocompression, because the mother substrate of the electro-optic crystal and the mother substrate of the supporting substrate are heated to a few hundred degrees C or above, the influence of the stress (thermal stress) attributable to the difference in the thermal expansion becomes more conspicuous. Therefore, in the obtained joined body, there is a possibility that not only warping but also a crack occurs in the electro-optic crystal and a breaking occurs in the joined body itself. When the thermal stress internally exists in the electro-optic crystal substrate as an internal stress, an electro-optic constant of the electro-optic crystal changes from its original value. As a result, there can also occur a problem that the refractive index change of the terahertz wave becomes small and detection sensitivity and spatial resolution are deteriorated.

### Prior Art Documents

### Patent Documents

Patent Document 1: Japanese Patent Application Laid-Open Number 2010-156674
Patent Document 2: Japanese Patent Application Laid-Open Number 2003-270598
Patent Document 3: Japanese Patent Application Laid-Open Number 2002-337274

### Summary of Invention

The invention of the present application has been made in view of the above problems. An object of the present invention is to provide in a stable quality a terahertz-wave detection element suitably suppressing the occurrence of a warping in the element as a whole and a crack in the electro-optic crystal, and suitably securing joining strength between the electro-optic crystal and a supporting substrate.

In order to solve the above problems, according to a first aspect of the present invention, there is provided a terahertz-wave detection element capable of detecting a spatial intensity distribution that an incident terahertz wave has. The terahertz-wave detection element includes: an electro-optic crystal layer consisting of an electro-optic crystal in which a refractive index at an incident position of the terahertz wave changes in accordance with incident intensity of the terahertz wave at the incident position; a supporting substrate that supports the electro-optic crystal layer; a resin layer that joins the electro-optic crystal layer and the supporting substrate together; a total reflection layer formed on a surface of the electro-optic crystal and consisting of a first dielectric multilayer film; and a reflection prevention layer formed on a surface of the supporting substrate and consisting of a second dielectric multilayer film. The terahertz-wave detection element is configured to detect the spatial-characteristics distribution which is generated in probe light irradiated the electro-optic crystal layer in superposition with the terahertz wave and which corresponds to a spatial distribution of a refractive index generated in the electro-optic crystal layer by incidence of the terahertz wave, thereby to detect the spatial intensity distribution of the incident terahertz wave. A thickness of the electro-optic crystal layer is equal to or larger than 1 µm and equal to or smaller than 10 µm. A thickness of the resin layer is equal to or larger than 0.1 µm and equal to or smaller than 1 µm. A thickness of the total reflection layer is equal to or larger than 1 µm. A ratio of a thickness of the resin layer to a thickness of the total reflection layer is equal to or smaller than 1/3.

According to a second aspect of the present invention, in the terahertz-wave detection element according to the first aspect, a coefficient of thermal expansion of the total reflection layer is smaller than a coefficient of thermal expansion of the electro-optic crystal layer.

According to a third aspect of the present invention, in a terahertz-wave detection element according to the first or second aspect, flatness of the supporting substrate is equal to or smaller than 20 µm, and parallelism is equal to or smaller than 3 µm.

According to a fourth aspect of the present invention, in a terahertz-wave detection element according to any of the first to third aspects, the spatial-characteristics distribution generated in the probe light is an intensity distribution of the probe light.

According to a fifth aspect of the present invention, there is provided a method of manufacturing a terahertz-wave detection element capable of detecting a spatial intensity distribution that an incident terahertz wave has, the method including: a joining step of joining by an adhesive consisting of a thermosetting resin, a first substrate consisting of an electro-optic crystal in which a refractive index at an incident position of a terahertz wave changes in accordance with incident intensity of the terahertz wave at the incident position, and a second substrate that supports the electro-optic crystal; a polishing step of thinning the first substrate of a joined body obtained by the joining step, to a thickness equal to or larger than 1 µm and equal to or smaller than 10 µm, by polishing the first substrate; a total-reflection layer formation step of forming a total reflection layer consisting of a first dielectric multilayer film on a surface of the first substrate of the joined body after performing the polishing step; a reflection-prevention layer formation step of forming a reflection prevention layer consisting of a second dielectric multilayer film on a surface of the second substrate of the joined body; and a segmentation step of obtaining a large number of terahertz-wave detection elements by cutting the joined body in which the total reflection layer and the reflection prevention layer have been formed, into pieces of a predetermined element size. In the joining step, the first substrate and the second substrate are joined together such that a thickness of a resin layer formed by thermosetting the adhesive becomes equal to or larger than 0.1 µm and equal to or smaller than 1 µm. In the total-reflection layer formation step, the total reflection layer is formed in a thickness equal to or larger than 1 µm. A ratio of a thickness of the resin layer to a thickness of the total reflection layer is set equal to or smaller than 1/3.

According to a sixth aspect of the present invention, there is provided a joined body formed by joining together a first substrate consisting of an electro-optic crystal and a second substrate that supports the electro-optic crystal by a resin layer consisting of a thermosetting resin, the joined body including: a total reflection layer consisting of a first dielectric multilayer film, formed on a surface of the electro-optic crystal; and a reflection prevention layer consisting of a second dielectric multilayer film, formed on a surface of the supporting substrate. A thickness of the resin layer is equal to or larger than 0.1 µm and equal to or smaller than 1 µm. A thickness of the total reflection layer is equal to or larger than 1 µm. A ratio of a thickness of the resin layer to a thickness of the total reflection layer is equal to or smaller than 1/3.

According to a seventh aspect of the present invention, there is provided an observation apparatus including a terahertz-wave detection element according to any of the first to fourth aspects such that a surface of a side of the electro-optic crystal layer is served as a mounting surface of a specimen. The observation apparatus includes: a terahertz-wave irradiation optical system that irradiates the terahertz wave toward the mounting surface on which the specimen is mounted; a probe-light irradiation optical system that irradiates the probe light to the electro-optic crystal layer from the supporting substrate side; and an observation optical system that observes an image of the probe light which has a spatial-characteristics distribution, said probe light being emitted from the electro-optic crystal layer in which a spatial distribution of the refractive index is generated by incidence of the terahertz wave.

According to the first to fifth aspects of the present invention, there can be realized a terahertz-wave detection element with crack free and high spatial resolution.

According to the sixth aspect of the present invention, it is possible to obtain a joined body usable of manufacturing a crack free terahertz-wave detection element securing joining strength between the first substrate and the second substrate.

According to the seventh aspect of the present invention, it is possible to realize an observation apparatus capable of observing a biological sample in high spatial resolution and in real time.

### Brief Description of Drawings

Fig. 1 is a schematic sectional view showing a configuration of a terahertz-wave detection element 10.
Fig. 2 is a view schematically showing a configuration of an observation apparatus 1000 built in with the terahertz-wave detection element 10.
Fig. 3 is a view schematically showing an outline of a flow of manufacturing the terahertz-wave detection element 10.

### Description of Embodiments

### <Configuration of terahertz-wave detection element>

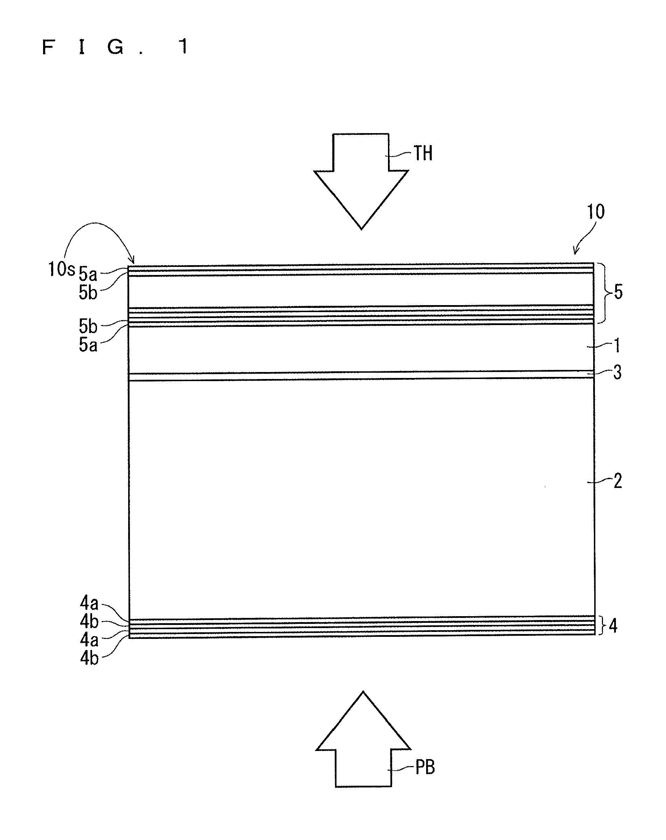

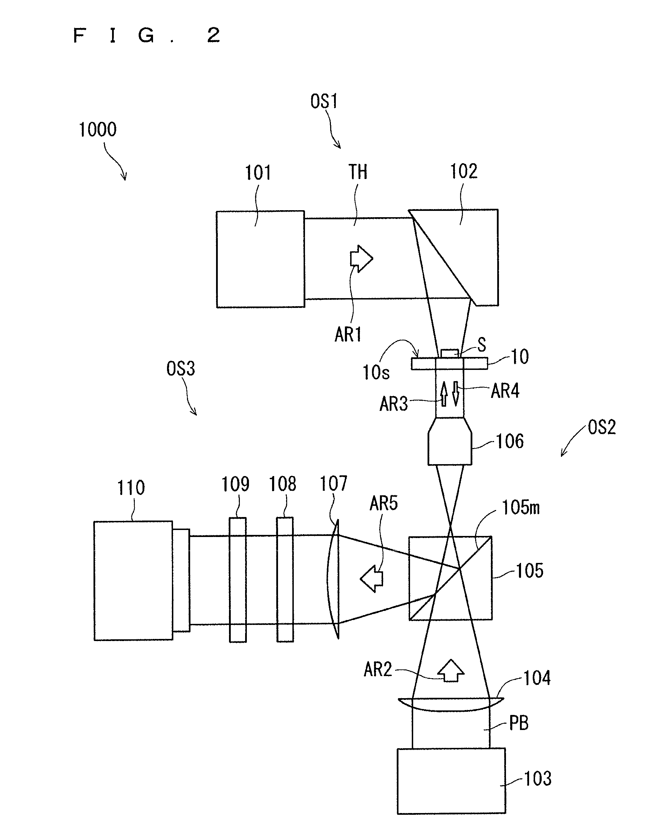

Fig. 1 is a schematic sectional view showing a configuration of a terahertz-wave detection element 10 according to the present embodiment. Fig. 2 is a view schematically showing a configuration of an observation apparatus 1000 built in with the terahertz-wave detection element 10. A large and small relationship of a thickness of each layer in Fig. 1 does not reflect actual thicknesses.

As shown in Fig. 1, the terahertz-wave detection element 10 according to the present embodiment mainly includes an electro-optic crystal layer 1, a supporting substrate 2, and a resin layer 3 as a joining layer between the electro-optic crystal layer 1 and the supporting substrate 2.

The terahertz-wave detection element 10 is mainly used in the observation apparatus 1000 that performs inspection and observation of a biological cell, as shown in Fig. 2. In the observation apparatus 1000, a terahertz wave TH and a probe light PB are irradiated in superposition to the terahertz-wave detection element 10, in a state that a specimen S (Fig. 2) such as a biological cell is mounted on a mounting surface 10s of the terahertz-wave detection element 10. That is, in the observation apparatus 1000, the terahertz-wave detection element 10 also plays a role of a stage of the specimen S. The terahertz-wave detection element 10 may have a plane surface sufficient enough to hold the specimen S, and representatively, has a size of about a few mm square in a planar view. Further, details of the observation apparatus 1000 and observation of the specimen S using the observation apparatus 1000 will be described later.

For an electro-optic crystal that forms the electro-optic crystal layer 1, there can be exemplified a lithium niobate (LN) crystal, a lithium tantalate (LT) crystal, a ZnTe crystal, a GaAs crystal, a GaP crystal, a KTP (KTiOPO₄) crystal, and a DAST (4-dimethylamino-N-methyl-4-stilbazolium tosylate) crystal, for example. Among the above, LN and LT may be in a stoichiometry composition, or may be doped with MgO and the like in advance for the purpose of reducing an optical damage. Further, in the case of using LN and LT, it is preferable that an x-cut plate or a y-cut plate having a z axis existing in an in-plane direction is used so that r33 of a large electro-optic effect can be utilized as an electro-optic constant.

A thickness of the electro-optic crystal layer 1 needs to be equal to or smaller than 30 µm. When a thickness of the electro-optic crystal layer 1 is set larger than 30 µm, a crack can occur in the electro-optic crystal layer 1 in a manufacturing process of the terahertz-wave detection element 10, and therefore, this size is not preferable. A thickness of the electro-optic crystal layer 1 is preferably equal to or smaller than 10 µm. When a thickness of the electro-optic crystal layer 1 is equal to or smaller than 10 µm, it is possible to set the spatial resolution to equal to or smaller than 20 µm when the terahertz-wave detection element 10 is used in the observation apparatus 1000. When the spatial resolution is equal to or smaller than 20 µm, the biological sample can be satisfactorily observed.

The smaller a thickness of the electro-optic crystal layer 1 is, the higher the spatial resolution becomes. However, from the viewpoint of processing accuracy and from the viewpoint of detection accuracy of the probe light PB, it is preferable that the electro-optic crystal layer 1 has a thickness equal to or larger than 1 µm.

The supporting substrate 2 is a substrate that supports the electro-optic crystal layer 1 having a small thickness as described above. The supporting substrate 2 may be configured by any of amorphous, a single crystal, and a polycrystal, but is preferably not an electro-optic crystal. In addition, it is preferable that an azimuth of the supporting substrate 2 is determined so that susceptibility to an electric field in a substrate horizontal direction is small. In view of the above points, for the supporting substrate 2, it is suitable to use a glass substrate, a quartz substrate, an alumina substrate, a magnesium oxide substrate, and the like. Regarding a thickness of the supporting substrate 2, there is no particular limit so far as a certain level of strength and handleability can be secured. However, it is suitable to use the supporting substrate 2 of a thickness of about a few hundred µm to a few mm. From the viewpoint of preventing a scattering of the probe light PB, it is preferable that a surface roughness of the supporting substrate 2 is equal to or smaller than 1/5 of the wavelength of the probe light PB.

The resin layer 3 is a joining layer between the electro-optic crystal layer 1 and the supporting substrate 2. The resin layer 3 is a layer consisting of an epoxy thermosetting resin. The resin layer 3 has a coefficient of thermal expansion larger than the coefficient of thermal expansion of the electro-optic crystal layer 1. How to join the electro-optic crystal layer 1 and the supporting substrate 2 will be described later.

From the viewpoint of holding a joining state between the electro-optic crystal layer 1 and the supporting substrate 2, it is sufficient for the resin layer 3 to have a thickness equal to or larger than 0.1 µm. However, from the viewpoint of suppressing warping in the terahertz-wave detection element 10 and preventing the occurrence of a crack in the electro-optic crystal layer 1, it is preferable to form the resin layer 3 in a thickness equal to or smaller than 1 µm. This point will be described later.

The electro-optic crystal layer 1, the supporting substrate 2, and the resin layer 3 that joins the electro-optic crystal layer 1 and the supporting substrate 2 described above together are basic components of the terahertz-wave detection element 10.

However, the terahertz-wave detection element 10 according to the present embodiment includes a reflection prevention layer 4 and a total reflection layer 5, for the purpose of improving observation performance when used in the observation apparatus 1000.

The reflection prevention layer 4 is formed on a surface of the supporting substrate 2 at the opposite side of the resin layer 3. The reflection prevention layer 4 is provided to prevent reflection on the surface of the supporting substrate 2, of the probe light PB incident to the terahertz-wave detection element 10 from the supporting substrate 2 side.

Specifically, the reflection prevention layer 4 is formed on the main surface of the supporting substrate 2, as a dielectric multilayer film formed by repeatedly and alternately stacking a first-unit reflection prevention layer 4a and a second-unit reflection prevention layer 4b made of dielectrics of mutually different compositions. As dielectrics that can be used to form the reflection prevention layer 4, there can be exemplified silicon oxide, tantalum oxide, titanium oxide, magnesium fluoride, zirconia, aluminum oxide, hafnium oxide, niobium oxide, and zinc sulfide. Alternatively, the reflection prevention layer 4 may be a single layer film of either of the above dielectrics.

For example, by a deposition method, it is suitable to provide the reflection prevention layer 4 in a total thickness of about 0.2 µm to 0.5 µm, by forming the first-unit reflection prevention layer 4a consisting of Ta₂O₅ and the second-unit reflection prevention layer 4b consisting of SiO₂ respectively in a thickness of several dozens of nm to a hundred and several dozens of nm. Accordingly, the reflection prevention layer 4 of reflectance equal to or lower than 0.1% can be provided.

The total reflection layer 5 is formed on the surface of the electro-optic crystal layer 1, at the opposite side of the resin layer 3. The total reflection layer 5 is provided to make a total reflection of the probe light PB incident to the terahertz-wave detection element 10 from the supporting substrate 2 side.

Specifically, the total reflection layer 5 is formed on the main surface of the electro-optic crystal layer 1, as a dielectric multilayer film formed by stacking repeatedly and alternately the first-unit total reflection layer 5a and the second-unit total reflection layer 5b consisting of dielectrics of mutually different compositions. The total reflection layer 5 has a coefficient of thermal expansion smaller than the coefficient of thermal expansion of the electro-optic crystal layer 1. In the present embodiment, the coefficient of thermal expansion of the total reflection layer 5 as a multi-layer film of the first-unit total reflection layer 5a and the second-unit total reflection layer 5b of mutually different compositions is assumed to be an effective (average) value as a layer in total.

As the dielectrics that can be used to form the total reflection layer 5, there can be exemplified silicon oxide, tantalum oxide, titanium oxide, magnesium fluoride, zirconia, aluminum oxide, hafnium oxide, niobium oxide, and zinc sulfide.

The total reflection layer 5 is formed preferably in a thickness equal to or larger than 1 µm, from the viewpoint of suppressing warping in the terahertz-wave detection element 10 and preventing the occurrence of a crack in the electro-optic crystal layer 1. This point will be described later.

For example, by a deposition method, it is suitable to provide the total reflection layer 5 in a total thickness of about a few µm, by forming the first-unit total reflection layer 5a consisting of SiO₂ and the second-unit total reflection layer 5b consisting of Ta₂O₅ respectively in a thickness of a submicron order, respectively. Accordingly, it is possible to provide the total reflection layer 5 of reflectance equal to or higher than 99% and a coefficient of thermal expansion smaller than a coefficient of thermal expansion in the z axis direction of the LN crystal.

When the terahertz-wave detection element 10 includes the reflection prevention layer 4 and the total reflection layer 5, the loss of the incident probe light PB is reduced, and therefore, the quality of an observation image in the case of using the terahertz-wave detection element 10 in the observation apparatus 1000 improves.

### <Observation by observation apparatus>

Next, there will be described a configuration of the observation apparatus 1000, and an observation mode of the specimen S using the observation apparatus 1000. As shown in Fig. 2, the observation apparatus 1000 includes the terahertz-wave detection element 10, a terahertz-wave irradiation optical system OS1, and a probe-light irradiation optical system OS2, in addition to the terahertz-wave detection element 10 as a stage on which the specimen S is mounted.

The terahertz-wave irradiation optical system OS1 mainly includes a terahertz-wave generation source 101, a parabolic mirror 102, and an observation optical system OS3. The terahertz-wave generation source 101 is configured to generate a terahertz wave TH by irradiating a femtosecond titanium laser beam of a wavelength 800 nm to a terahertz-wave conversion element.

The probe-light irradiation optical system OS2 mainly includes a probe-light light source 103, a first intermediate lens 104, a non-polarization beam splitter 105, and an objective lens 106. For the probe light PB, there is used a femtosecond titanium laser beam which is the same as that used in the terahertz-wave generation source 101. Therefore, by branching the femtosecond titanium laser beam emitted from the probe-light light source 103 into two directions in the middle, one femtosecond titanium laser beam may be used as the probe light PB, and the other femtosecond titanium laser beam may be utilized to generate the terahertz wave TH in the terahertz-wave generation source 101. In this case, the probe-light light source 103 may be configured as a system capable of measuring by what is called a THz-TDS (Terahertz Time Domain Spectroscopy) method, where the terahertz light is detected by sampling with a light delay unit.

The observation optical system OS3 mainly includes a second intermediate lens 107, a 1/4 wavelength plate 108, a polarizer 109, and an imaging device 110 consisting of a CCD, for example.

In the observation apparatus 1000 having the above configuration, the terahertz-wave generation source 101 is configured to generate a terahertz wave TH by irradiating a femtosecond titanium laser beam of a wavelength 800 nm to a terahertz-wave conversion element. In the state that the specimen S is mounted on the mounting surface 10s of the terahertz-wave detection element 10, the terahertz wave TH emitted from the terahertz-wave generation source 101 as shown by an arrow AR101, and reflected and converged by the parabolic mirror 102, is irradiated to the specimen S. As described above, because the terahertz-wave detection element 10 includes the total reflection layer 5, actually, the surface of the total reflection layer 5 becomes the mounting surface 10s.

The terahertz wave TH irradiated to the specimen S is absorbed in accordance with a spatial distribution (a two-dimensional distribution) of a cellular component, a thickness, and the like in the specimen S, and intensity of the terahertz wave TH is spatially (two-dimensionally) modulated. Then, the modulated terahertz wave TH is incident to the electro-optic crystal layer 1 of the terahertz-wave detection element 10. After that, in the electro-optic crystal layer 1, there is generated by a Pockels effect a distribution in levels of a refractive index change by a double refraction, in accordance with an intensity distribution generated in the incident terahertz wave TH. In other words, the refractive index at the incident position of the terahertz wave TH varies in accordance with incident intensity of the terahertz wave TH at its incident position. As a result, the distribution of the refractive index change (the distribution of the refractive index eventually) reflects spatial information of the specimen S.

On the other hand, in the observation apparatus 1000, the probe light PB emitted from the probe-light source 103 as a parallel light is converted into a non-parallel light by the first intermediate lens 104. After that, as shown by an arrow AR2 and an arrow AR3, the non-parallel light passes through the non-polarization beam splitter 105 and the objective lens, and is incident as a parallel light from the supporting substrate 2 side (from the reflection prevention layer 4 side) to the terahertz-wave detection element 10. For the probe light PB, there is used the probe light PB of a wavelength band 800 nm. Since the terahertz-wave detection element 10 according to the present embodiment includes the reflection prevention layer 4 on the surface of the supporting substrate 2, the probe light PB is incident to the electro-optic crystal layer 1 substantially without receiving loss.

The probe light PB incident to the electro-optic crystal layer 1 is totally reflected by the total reflection layer 5 comprised in the terahertz-wave detection element 10, while it is refracted in accordance with the refractive index distribution generated in the electro-optic crystal layer 1 according to the intensity distribution of the terahertz wave TH as described above. Then, as shown by an arrow AR4, the probe light PB is emitted toward the objective lens 106 and the non-polarization beam splitter 105. The probe light PB emitted from the terahertz-wave detection element 10 in this manner has a spatial distribution of intensity (a light quantity) reflecting the spatial distribution of the refractive index (a refractive index change).

The probe light PB emitted from the terahertz-wave detection element 10 and incident to the non-polarization beam splitter 105 is reflected by a half-mirror 105m comprised in the non-polarization beam splitter 105. Then, as shown by an arrow AR5, the probe light PB is converted into a parallel light by the second intermediate lens 107, sequentially passes through the 1/4 wavelength plate 108 and the polarizer 109, and is incident to the imaging device 110.

As described above, the probe light PB incident to the imaging device 110 has the intensity distribution reflecting the refractive index distribution generated in the electro-optic crystal layer 1 in the terahertz-wave detection element 10. The refractive index distribution has been generated by the incidence to the electro-optic crystal layer 1, of the terahertz wave TH which has transmitted through the specimen S. As a result, in the observation apparatus 1000, an image formed in the imaging device 110 represents a distribution in the spatial (two-dimensional) state of the specimen S. Accordingly, in the observation apparatus 1000, the specimen S can be observed in real time by observing the image formed in the imaging device 110.

### <Manufacturing method of terahertz-wave detection element>

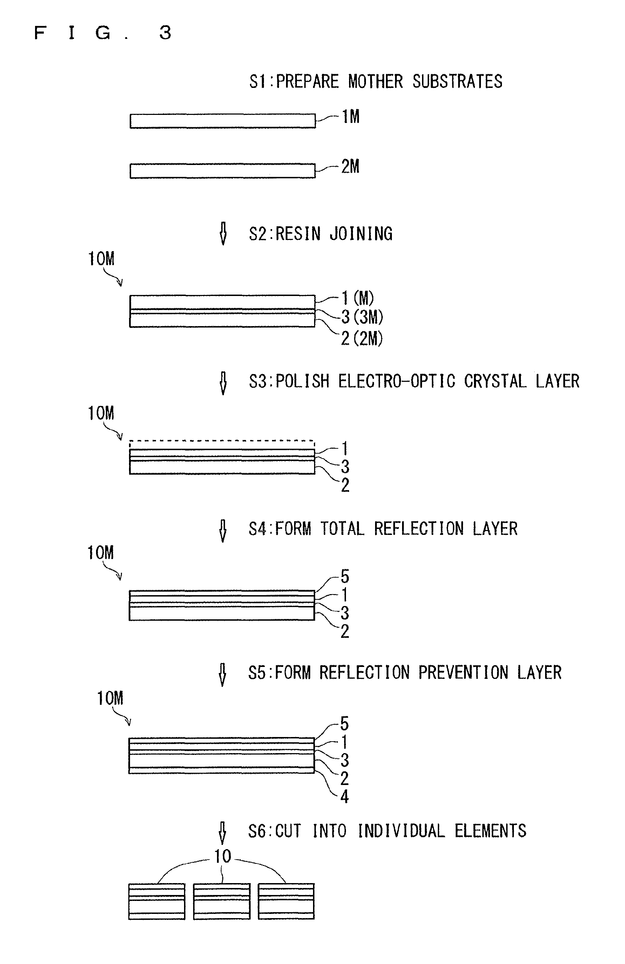

Next, a manufacturing method of the terahertz-wave detection element 10 having the above configuration according to the present embodiment will be described in detail. Fig. 3 is a view schematically showing an outline of a flow of manufacturing the terahertz-wave detection element 10 according to the present embodiment.

As described above, the terahertz-wave detection element 10 according to the present embodiment is based on the configuration having the electro-optic crystal layer 1 and the supporting substrate 2 joined together by the resin layer 3. Because the planar size of the terahertz-wave detection element 10 is at most about a few mm square, it is difficult and inefficient to perform joining by preparing the electro-optic crystal layer 1 and the supporting substrate 2 of this planar size. Therefore, in the present embodiment, the terahertz-wave detection element 10 is manufactured by what is called a multi-piece forming.

First, as shown in Fig. 3, there are prepared a first mother substrate 1M and a second mother substrate 2M having sufficiently large sizes (diameters) as compared with the element size (Step S1). For example, it is suitable to prepare the first mother substrate 1M and the second mother substrate 2M of a few inch diameter.

The first mother substrate 1M is a substrate having the same composition and the same crystal state as those of the electro-optic crystal layer 1, and also having a large thickness. However, for the first mother substrate 1M, it is preferable to use the first mother substrate 1M having flatness equal to or smaller than 10 µm and parallelism equal to or smaller than 3 µm. Concerning the thickness of the first mother substrate 1M, a value of the thickness is required to be such a degree that a certain level of strength and handleability can be secured. On the other hand, when a difference in the thickness between the first mother substrate 1M and the electro-optic crystal layer 1 finally configuring the terahertz-wave detection element 10 is too large, excessive time is required in the polishing process described later. Therefore, it is suitable to use the first mother substrate 1M of a thickness of about a few hundred µm to a few mm, for example.

The second mother substrate 2M is a substrate having the same composition, the same crystal state, and the thickness as those of the supporting substrate 2. However, for the second mother substrate 2M, it is preferable to use the second mother substrate 2M of flatness equal to or smaller than 25 µm and parallelism equal to or smaller than 3 µm, and more preferably, flatness equal to or smaller than 15 µm and parallelism equal to or smaller than 2 µm.

Unless particularly specified, in the present description, flatness and parallelism are expressed as values converted for a substrate (or a joined body) of 4-inch diameter. In a 4-inch diameter conversion, flatness of 25 µm and flatness of 15 µm are 5 µm and 3.8 µm, respectively per 1 cm². In a 4-inch diameter conversion, parallelism of 3 µm and parallelism of 1 µm are 0.6 µm and 0.2 µm, respectively per 1 cm².

After the first mother substrate 1M and the second mother substrate 2M have been prepared, next, both mother substrates are joined by resin adhesion, and a joined body 10M is obtained (Step S2). Specifically, after an epoxy adhesive is coated on a surface of the first mother substrate 1M and the second mother substrate 2M is stuck thereto such that their orientation flats coincide, they are crimped by pressing. Thereafter, the resultant is left for a few hours in the atmosphere of 200°C to harden the adhesive to form an adhesion layer 3M, so that the joined body 10M is obtained.

After performing the process described later, the joined body 10M is finally cut into a large number of terahertz-wave detection elements 10. Then, portions originated from the first mother substrate 1M, the second mother substrate 2M, and the adhesion layer 3M respectively become the electro-optic crystal layer 1, the supporting substrate 2, and the resin layer 3 of the terahertz-wave detection element 10. For convenience sake, after the joined body 10M has been obtained, the first mother substrate 1M will be simply referred to as the electro-optic crystal layer 1, the second mother substrate 2M will be simply referred to as the supporting substrate 2, and the adhesion layer 3M will be simply referred to as the resin layer 3.

Next, the obtained electro-optic crystal layer 1 of the joined body 10M is polished by a publicly known sheet processing method, until the electro-optic crystal layer 1 has a thickness equal to or larger than 1 µm and equal to or smaller than 10 µm which is a preferable thickness of the electro-optic crystal layer 1 in the above-described element state (Step S3).

After ending the polishing, an dielectric multilayer film serving as the total reflection layer 5 is formed on the polished electro-optic crystal layer 1 by a deposition method (Step S4). Next, on the supporting substrate 2, a dielectric multilayer film serving as the reflection prevention layer 4 is formed by the deposition method (Step S5). These dielectric multilayer films will be also referred to as the total reflection layer 5 and the reflection prevention layer 4, respectively, for convenience sake.

Finally, the joined body 10M formed up to the reflection prevention layer 4 is cut into predetermined element sizes on the surface along a joining direction by a publicly known method such as dicing to have a desired planar size. As a result, a large number of the terahertz-wave detection element 10 are obtained (step S6).

### <Stabilization of element quality>

In order to realize high spatial resolution in the terahertz-wave detection element 10 according to the present embodiment, the thickness of the electro-optic crystal layer 1 needs to be equal to or smaller than 10 µm as described above.

However, in the case of producing the terahertz-wave detection element 10 by multiple piece forming from the joined body 10M, in order to further suppress a variation in the quality between individual elements, in the state of the joined body 10M, it is necessary to suppress the occurrence of a crack in the electro-optic crystal layer 1 and overall warping in the element attributable to a difference in the coefficient of thermal expansion between the electro-optic crystal layer 1, the supporting substrate 2, and the resin layer 3.

In order to meet this request, in the present embodiment, as described above, in manufacturing the joined body 10M, there are used the first mother substrate 1M having flatness equal to or smaller than 10 µm and parallelism equal to or smaller than 3 µm, and the second mother substrate 2M having flatness equal to or smaller than 25 µm and parallelism equal to or smaller than 3 µm.

In addition, in the present embodiment, a thickness of the resin layer 3 whose coefficient of thermal expansion is 30 ppm to 80 ppm/°C and is larger than that of the electro-optic crystal layer 1 (in the case of LN and LT, a z-axis direction coefficient of thermal expansion: 5 ppm/°C, and x-axis and y-axis direction coefficient of thermal expansion: 16 ppm/°C) is set to be equal to or smaller than 0.1 µm and equal to or smaller than 1 µm. On the other hand, a thickness of the total reflection layer 5 is set to be equal to or larger than 1 µm so that a coefficient of thermal expansion is 2 ppm/°C to 5 ppm/°C which is smaller than or about the same as the coefficient of thermal expansion of the electro-optic crystal layer 1. Further, a ratio of the thickness of the resin layer 3 to the thickness of the total reflection layer 5 (a resin layer thickness/a total reflection layer thickness) is set equal to or smaller than 1/3. Accordingly, because the thermal stresses acting on both surfaces of the electro-optic crystal layer 1 are offset, the occurrence of a crack in the electro-optic crystal layer 1 and warping of the joined body 10M can be reduced. As a result, the terahertz-wave detection element 10 having high spatial resolution can be stably obtained.

As described above, according to the present embodiment, by suitably adjusting the thicknesses of the resin layer and the total reflection layer, a terahertz-wave detection element with crack free and high spatial resolution can be stably obtained.

By applying the terahertz-wave detection element to the observation apparatus, the observation apparatus capable of observing a biological sample in high spatial resolution and in real time can be realized.

### Examples

### (Example 1)

In the present example, a thickness of the electro-optic crystal layer 1 was differentiated to five levels and a thickness of the total reflection layer 5 was differentiated to five levels to manufacture the joined body 10M under 25 manufacturing conditions in total. Presence of a defect such as a crack occurrence in the electro-optic crystal layer 1 was evaluated. Under each manufacturing condition, ten samples were manufactured.

Specifically, in each manufacturing condition, first, for the first mother substrate 1M, there was prepared an MgO 5 mol% doped x-cut plate LN single crystal substrate in a 4-inch diameter and in a 500 µm thickness (a z-axis direction coefficient of thermal expansion: 5 ppm/°C, and x-axis and y-axis direction coefficient of thermal expansion: 16 ppm/°C). For the second mother substrate 2M, there was prepared a TEMPAX glass in a 4-inch diameter and in a 500 µm thickness (a coefficient of thermal expansion: 3.3 ppm/°C).

Flatness of the second mother substrate 2M was within 3 µm as a result of measurement by a Fujinon interferometer. Parallelism was within 1 µm as a result of measurement by a micrometer.

After an epoxy adhesive is coated on a surface of the first mother substrate 1M and the second mother substrate 2M was stuck thereto such that their orientation flats coincided, they were crimped by pressing. Next, the press contacted resultant was left for one hour in the atmosphere of 200°C to harden the adhesive to form an adhesion layer 3M (a coefficient of thermal expansion: 40 ppm/°C), so that the joined body 10M was obtained. In this case, based on a result of preliminary experiments conducted in advance for specifying a relationship between a coating quantity of an epoxy adhesive, a pressing pressure, and a thickness of the adhesion layer 3M, the coating quantity of the epoxy adhesive and the pressing pressure at the time of pressing were adjusted such that the thickness of the adhesion layer 3M became 0.3 µm.

After the joined body 10M was obtained, the electro-optic crystal layer 1 was ground and polished by a publicly known sheet processing method. More specifically, for the joined body 10M of the same thickness of the resin layer 3, the thickness of the electro-optic crystal layer 1 was changed to five levels of 1 µm, 3 µm, 10 µm, 30 µm, and 35 µm. The results of the measurement of flatness and parallelism of the polished electro-optic crystal layer 1 were within 3 µm and 1 µm, respectively.

Thereafter, on the main surface of the electro-optic crystal layer 1 of each joined body 10M, by the deposition method, an SiO₂ layer as the first-unit total reflection layer 5a and a Ta₂O₅ layer as the second-unit total reflection layer 5b were alternately formed such that a plurality of layers were formed. Accordingly, the total reflection layer 5 as the dielectric multilayer film (a coefficient of thermal expansion: 4 ppm/°C) was obtained. A total thickness of the total reflection layer 5 was differentiated to five levels of 0.5 µm, 0.9 µm, 1.1 µm, 3 µm, and 3.5 µm. In this case, thicknesses of the SiO₂ layer and the Ta₂O₅ layer were 137 nm and 97 nm, respectively. As a result of evaluating the reflection characteristic, reflectance around 800 nm was equal to or higher than 99% in the range of 200 nm.

Further, on the main surface of the supporting substrate 2 of each joined body 10M, by the deposition method, a Ta₂O₅ layer as the first-unit reflection prevention layer 4a and an SiO₂ layer as the second-unit reflection prevention layer 4b were alternately formed by 4 layers in total. As a result, the reflection prevention layer 4 as the dielectric multilayer film was obtained. More specifically, the reflection prevention layer 4 in a total thickness of 0.3 µm was formed by sequentially forming a Ta₂O₅ layer in a thickness 31 nm, an SiO₂ layer in a thickness 40 nm, a Ta₂O₅ layer in a thickness 93 nm, and an SiO₂ layer in a thickness 125 nm from a near side of the supporting substrate 2.

After forming the reflection prevention layer 4, the occurrence status of a crack in the electro-optic crystal layer 1 in each joined body 10M was observed visually and by an optical microscope.

Table 1 shows a list of thickness conditions of the electro-optic crystal layer 1, the resin layer 3, and the total reflection layer 5, and an evaluation result of the joined body 10M.

**[Table 1]**

| No. | Resin layer thickness (µm) | Total reflection layer thickness (µm) | Resin layer thickness/total reflection layer thickness | Electro-optic crystal layer thickness (µm) | Number of samples | Number of crack occurrence samples |
|---|---|---|---|---|---|---|
| 1-1 | 0.3 | 0.5 | 0.600 | 1 | 10 | 6 |
| 1-2 | | | | 3 | 10 | 7 |
| 1-3 | | | | 10 | 10 | 7 |
| 1-4 | | | | 30 | 10 | 10 |
| 1-5 | | | | 35 | 10 | 10 |
| 2-1 | 0.3 | 0.9 | 0.333 | 1 | 10 | 2 |
| 2-2 | | | | 3 | 10 | 3 |
| 2-3 | | | | 10 | 10 | 3 |
| 2-4 | | | | 30 | 10 | 5 |
| 2-5 | | | | 35 | 10 | 10 |
| 3-1 | 0.3 | 1.1 | 0.273 | 1 | 10 | ***0*** |
| 3-2 | | | | 3 | 10 | ***0*** |
| 3-3 | | | | 10 | 10 | ***0*** |
| 3-4 | | | | 30 | 10 | **3** |
| 3-5 | | | | 35 | 10 | 6 |
| 4-1 | 0.3 | 3 | 0.100 | 1 | 10 | ***0*** |
| 4-2 | | | | 3 | 10 | ***0*** |
| 4-3 | | | | 10 | 10 | ***0*** |
| 4-4 | | | | 30 | 10 | 2 |
| 4-5 | | | | 35 | 10 | 6 |
| 5-1 | 0.3 | 3.5 | 0.086 | 1 | 10 | ***0*** |
| 5-2 | | | | 3 | 10 | ***0*** |
| 5-3 | | | | 10 | 10 | ***0*** |
| 5-4 | | | | 30 | 10 | 1 |
| 5-5 | | | | 35 | 10 | 6 |

As is clear from Table 1, for the joined body 10M in which the thickness of the total reflection layer 5 was smaller than 1 µm, there were samples (No. 1-1 to 1-5, and 2-1 to 2-5) in which a crack occurred in the electro-optic crystal layer 1, regardless of the thickness of the electro-optic crystal layer 1. Further, for the joined body 10M in which the thickness of the total reflection layer 5 was larger than 1 µm and the thickness of the electro-optic crystal layer 1 was equal to or larger than 30 µm, there were also samples (No. 3-4, 3-5, 4-4, 4-5, 5-4, and 5-5) in which a crack occurred.

On the other hand, for the joined body 10M in which the thickness of the total reflection layer 5 was larger than 1 µm and the thickness of the electro-optic crystal layer 1 was equal to or smaller than 10 µm (No. 3-1 to 3-3, 4-1 to 4-3, and 5-1 to 5-3), no crack was confirmed in the electro-optic crystal layer 1 in any of the samples.

Overall, there was a tendency that, when the thickness of the electro-optic crystal layer 1 was smaller, a crack was less likely to occur, regardless of the thickness of the total reflection layer 5.

For samples in which there was no occurrence of a crack in the electro-optic crystal layer 1, flatness was measured by a thickness gage (manufactured by Heidenhain) of contact type. As a result, flatness was within 2 µm in all samples.

### (Example 2)

In the present example, the joined body 10M was manufactured and evaluated under 25 manufacturing conditions under the conditions and in the procedure similar to those in Example 1, except that the thickness of the total reflection layer 5 was fixed to 3 µm, and the thickness of the resin layer 3 was differentiated to five levels of 0.3 µm, 0.6 µm, 1 µm, 1.1 µm, and 1.5 µm. In this case, based on a result of preliminary experiments conducted in advance for specifying a relationship between a coating quantity of an epoxy adhesive, a pressing pressure, and a thickness of the adhesion layer 3M, the coating quantity of the epoxy adhesive and the pressing pressure at the time of pressing were adjusted such that the thickness of the adhesion layer 3M became a desired value.

Table 2 shows a list of thickness conditions of the electro-optic crystal layer 1, the resin layer 3, and the total reflection layer 5, and an evaluation result of the joined body 10M.

**[Table 2]**

| No. | Resin layer thickness (µm) | Total reflection layer thickness (µm) | Resin layer thickness/total reflection layer thickness | Electro-optic crystal layer thickness (µm) | Number of samples | Number of crack occurrence samples |
|---|---|---|---|---|---|---|
| 6-1 | 0.3 | 3 | 0.100 | 1 | 10 | ***0*** |
| 6-2 | | | | 3 | 10 | ***0*** |
| 6-3 | | | | 10 | 10 | ***0*** |
| 6-4 | | | | 30 | 10 | ***0*** |
| 6-5 | | | | 35 | 10 | 10 |
| 7-1 | 0.6 | 3 | 0.200 | 1 | 10 | ***0*** |
| 7-2 | | | | 3 | 10 | ***0*** |
| 7-3 | | | | 10 | 10 | ***0*** |
| 7-4 | | | | 30 | 10 | ***0*** |
| 7-5 | | | | 35 | 10 | 10 |
| 8-1 | 1 | 3 | 0.333 | 1 | 10 | ***0*** |
| 8-2 | | | | 3 | 10 | ***0*** |
| 8-3 | | | | 10 | 10 | ***0*** |
| 8-4 | | | | 30 | 10 | 3 |
| 8-5 | | | | 35 | 10 | 6 |
| 9-1 | 1.1 | 3 | 0.567 | 1 | 10 | 1 |
| 9-2 | | | | 3 | 10 | 1 |
| 9-3 | | | | 10 | 10 | 1 |
| 9-4 | | | | 30 | 10 | 3 |
| 9-5 | | | | 35 | 10 | 6 |
| 10-1 | 1.5 | 3 | 0.500 | 1 | 10 | 3 |
| 10-2 | | | | 3 | 10 | 3 |
| 10-3 | | | | 10 | 10 | 3 |
| 10-4 | | | | 30 | 10 | 4 |
| 10-5 | | | | 35 | 10 | 7 |

As is clear from Table 2, for the joined body 10M in which the thickness of the resin layer 3 was larger than 1 µm, there were samples (No. 9-1 to 9-5, and 10-1 to 10-5) in which a crack occurred in the electro-optic crystal layer 1, regardless of the thickness of the electro-optic crystal layer 1. Further, for the joined body 10M in which the thickness of the resin layer 3 was equal to or smaller than 1 µm but the thickness of the electro-optic crystal layer 1 was equal to or larger than 30 µm, there were sample in which a crack occurred in the electro-optic crystal layer 1 (No. 6-5, 7-5, 8-4, and 8-5).

On the other hand, for the joined body 10M in which the thickness of the resin layer 3 was equal to or smaller than 1 µm and the thickness of the electro-optic crystal layer 1 was equal to or smaller than 10 µm (No. 6-1 to 6-3, 7-1 to 7-3, and 8-1 to 8-3), no crack was confirmed in the electro-optic crystal layer 1 in any of the sample.

Overall, there was a tendency that, when the thickness of the electro-optic crystal layer 1 was smaller, a crack was less likely to occur, regardless of the thickness of the resin layer 3.

For samples in which there was no occurrence of a crack in the electro-optic crystal layer 1, flatness was measured by a thickness gage (manufactured by Heidenhain) of contact type. As a result, flatness was within 2 µm in all samples.

### (Example 3)

The joined body 10M was manufactured and evaluated using 25 manufacturing conditions under conditions and in procedures similar to those in Example 1, except that z-cut plate quartz of 4-inch diameter and 500 µm thickness was used for the second mother substrate 2M.

Flatness of the second mother substrate 2M was within 3 µm, and parallelism was within 1 µm. The results of the measurement of flatness and parallelism of the polished electro-optic crystal layer 1 were within 3 µm and 1 µm, respectively.

Table 3 shows a list of thickness conditions of the electro-optic crystal layer 1, the resin layer 3, and the total reflection layer 5, and an evaluation result of the joined body 10M.

**[Table 3]**

| No. | Resin layer thickness (µm) | Total reflection layer thickness (µm) | Resin layer thickness/total reflection layer thickness | Electro-optic crystal layer thickness (µm) | Number of samples | Number of crack occurrence samples |
|---|---|---|---|---|---|---|
| 11-1 | 0.3 | 0.5 | 0.600 | 1 | 10 | 8 |
| 11-2 | | | | 3 | 10 | 9 |
| 11-3 | | | | 10 | 10 | 9 |
| 11-4 | | | | 30 | 10 | 10 |
| 11-5 | | | | 35 | 10 | 10 |
| 12-1 | 0.3 | 0.9 | 0.333 | 1 | 10 | 3 |
| 12-2 | | | | 3 | 10 | 4 |
| 12-3 | | | | 10 | 10 | 5 |
| 12-4 | | | | 30 | 10 | 5 |
| 12-5 | | | | 35 | 10 | 10 |
| 13-1 | 0.3 | 1.1 | 0.273 | 1 | 10 | ***0*** |
| 13-2 | | | | 3 | 10 | ***0*** |
| 13-3 | | | | 10 | 10 | ***0*** |
| 13-4 | | | | 30 | 10 | 3 |
| 13-5 | | | | 35 | 10 | 7 |
| 14-1 | 0.3 | 3 | 1.100 | 1 | 10 | ***0*** |
| 14-2 | | | | 3 | 10 | ***0*** |
| 14-3 | | | | 10 | 10 | ***0*** |
| 14-4 | | | | 30 | 10 | 2 |
| 14-5 | | | | 35 | 10 | 7 |
| 15-1 | 0.3 | 3.5 | 0.086 | 1 | 10 | ***0*** |
| 15-2 | | | | 3 | 10 | ***0*** |
| 15-3 | | | | 10 | 10 | ***0*** |
| 15-4 | | | | 30 | 10 | 1 |
| 15-5 | | | | 35 | 10 | 7 |

As is clear from Table 3, also in the present example, for the joined body 10M in which the thickness of the total reflection layer 5 was smaller than 1 µm, there were samples (No. 11-1 to 11-5 and 12-1 to 12-5) in which a crack occurred in the electro-optic crystal layer 1, regardless of the thickness of the electro-optic crystal layer 1, as with Example 1. Further, for the joined body 10M in which the thickness of the total reflection layer 5 was larger than 1 µm and the thickness of the electro-optic crystal layer 1 was equal to or larger than 30 µm, there were also samples (No. 13-4, 13-5, 14-4, 14-5, 15-4, and 15-5) in which a crack occurred in the electro-optic crystal layer 1.

On the other hand, for the joined body 10M in which the thickness of the total reflection layer 5 was larger than 1 µm and the thickness of the electro-optic crystal layer 1 was equal to or smaller than 10 µm (No. 13-1 to 13-3, 14-1 to 14-3, and 15-1 to 15-3), no crack was confirmed in the electro-optic crystal layer 1 in any of the samples.

Overall, there was a tendency that, when the thickness of the electro-optic crystal layer 1 was smaller, a crack was less likely to occur, regardless of the thickness of the total reflection layer 5.

For samples in which there was no occurrence of a crack in the electro-optic crystal layer 1, flatness was measured by a thickness gage (manufactured by Heidenhain) of contact type. As a result, flatness was within 2 µm in all samples.

### (Example 4)

The joined body 10M was manufactured and evaluated using 25 manufacturing conditions under conditions and in procedures similar to those in Example 2, except that z-cut plate quartz of 4-inch diameter and 500 µm thickness was used for the second mother substrate 2M.

Flatness of the second mother substrate 2M was within 3 µm, and parallelism was within 1 µm. The results of the measurement of flatness and parallelism of the polished electro-optic crystal layer 1 were within 3 µm and 1 µm, respectively.

Table 4 shows a list of thickness conditions of the electro-optic crystal layer 1, the resin layer 3, and the total reflection layer 5, and an evaluation result of the joined body 10M.

**[Table 4]**

| No. | Resin layer thickness (µm) | Total reflection layer thickness (µm) | Resin layer thickness/total reflection layer thickness | Electro-optic crystal layer thickness (µ)m) | Number of samples | Number of crack occurrence samples |
|---|---|---|---|---|---|---|
| 16-1 | 0.3 | 3 | 0.100 | 1 | 10 | ***0*** |
| 16-2 | | | | 3 | 10 | ***0*** |
| 16-3 | | | | 10 | 10 | ***0*** |
| 16-4 | | | | 30 | 10 | 1 |
| 16-5 | | | | 35 | 10 | 10 |
| 17-1 | 0.6 | 3 | 0.200 | 1 | 10 | ***0*** |
| 17-2 | | | | 3 | 10 | ***0*** |
| 17-3 | | | | 10 | 10 | ***0*** |
| 17-4 | | | | 30 | 10 | 1 |
| 17-5 | | | | 35 | 10 | 10 |
| 18-1 | 1 | 3 | 0.333 | 1 | 10 | ***0*** |
| 18-2 | | | | 3 | 10 | ***0*** |
| 18-3 | | | | 10 | 10 | ***0*** |
| 18-4 | | | | 30 | 10 | 4 |
| 18-5 | | | | 35 | 10 | 6 |
| 19-1 | 1.1 | 3 | 0.367 | 1 | 10 | 2 |
| 19-2 | | | | 3 | 10 | 2 |
| 19-3 | | | | 10 | 10 | 2 |
| 19-4 | | | | 30 | 10 | 4 |
| 19-5 | | | | 35 | 10 | 7 |
| 20-1 | 1.5 | 3 | 0.500 | 1 | 10 | 5 |
| 20-2 | | | | 3 | 10 | 5 |
| 20-3 | | | | 10 | 10 | 5 |
| 20-4 | | | | 30 | 10 | 6 |
| 20-5 | | | | 35 | 10 | 8 |

As is clear from Table 4, also in the present example, for the joined body 10M in which the thickness of the resin layer 3 was larger than 1 µm, there were samples (No. 19-1 to 19-5, and 20-1 to 20-5) in which a crack occurred in the electro-optic crystal layer 1, regardless of the thickness of the electro-optic crystal layer 1, in a manner similar to that in Example 2. Further, for the joined body 10M in which the thickness of the resin layer 3 was equal to or smaller than 1 µm but the thickness of the electro-optic crystal layer 1 was equal to or larger than 30 µm, there were sample in which a crack occurred in the electro-optic crystal layer 1 (No. 16-4, 16-5, 17-4, 17-5, 18-4 , and 18-5).

On the other hand, for the joined body 10M in which the thickness of the resin layer 3 was equal to or smaller than 1 µm and the thickness of the electro-optic crystal layer 1 was equal to or smaller than 10 µm (No. 16-1 to 16-3, 17-1 to 17-3, and 18-1 to 18-3), no crack was confirmed in the electro-optic crystal layer 1 in any of the samples.

Over all, there was a tendency that, when the thickness of the electro-optic crystal layer 1 was smaller, a crack was less likely to occur, regardless of the thickness of the resin layer 3.

For samples in which there was no occurrence of a crack in the electro-optic crystal layer 1, flatness was measured by a thickness gage (manufactured by Heidenhain) of contact type. As a result, flatness was within 2 µm in all samples.

### (Summary of Example 1 and Example 4)

The result of each examples indicates the following. In order to obtain the joined body 10M with crack free and small warping, the thickness of the resin layer 3 needs to be equal to or smaller than 1 µm, while the thickness of the total reflection layer 5 needs to be equal to or larger than 1 µm. In this case, when a ratio of the thickness of the resin layer 3 to the thickness of the total reflection layer 5 (a resin layer thickness/a total reflection layer thickness) is equal to or smaller than 1/3, actually, the joined body 10M with crack free and small warping can be obtained.

## Claims

1. A terahertz-wave detection element capable of detecting a spatial intensity distribution that an incident terahertz wave has, said terahertz-wave detection element comprising:
an electro-optic crystal layer consisting of an electro-optic crystal in which a refractive index at an incident position of said terahertz wave changes in accordance with incident intensity of said terahertz wave at said incident position;
a supporting substrate that supports said electro-optic crystal layer;
a resin layer that joins said electro-optic crystal layer and said supporting substrate together;
a total reflection layer formed on a surface of said electro-optic crystal and consisting of a first dielectric multilayer film; and
a reflection prevention layer formed on a surface of said supporting substrate and consisting of a second dielectric multilayer film, wherein
said terahertz-wave detection element is configured to detect a spatial-characteristics distribution which is generated in probe light irradiated to said electro-optic crystal layer in superposition with said terahertz wave and which corresponds to a spatial distribution of a refractive index generated in said electro-optic crystal layer by incidence of said terahertz wave, thereby to detect said spatial intensity distribution of said incident terahertz wave,
a thickness of said electro-optic crystal layer is equal to or larger than 1 µm and equal to or smaller than 10 µm,
a thickness of said resin layer is equal to or larger than 0.1 µm and equal to or smaller than 1 µm,
a thickness of said total reflection layer is equal to or larger than 1 µm, and
a ratio of a thickness of said resin layer to a thickness of said total reflection layer is equal to or smaller than 1/3.

2. The terahertz-wave detection element according to claim 1, wherein
a coefficient of thermal expansion of said total reflection layer is smaller than a coefficient of thermal expansion of said electro-optic crystal layer.

3. The terahertz-wave detection element according to claim 1 or 2, wherein
flatness of said supporting substrate is equal to or smaller than 20 µm, and parallelism is equal to or smaller than 3 µm.

4. The terahertz-wave detection element according to any of claims 1 to 3, wherein
said spatial-characteristics distribution generated in said probe light is an intensity distribution of said probe light.

5. A method of manufacturing a terahertz-wave detection element capable of detecting a spatial intensity distribution that an incident terahertz wave has, said method comprising:
a joining step of joining by an adhesive consisting of a thermosetting resin, a first substrate consisting of an electro-optic crystal in which a refractive index at an incident position of a terahertz wave changes in accordance with incident intensity of said terahertz wave at said incident position, and a second substrate that supports said electro-optic crystal;
a polishing step of thinning said first substrate of a joined body obtained by said joining step, to a thickness equal to or larger than 1 µm and equal to or smaller than 10 µm, by polishing said first substrate;
a total-reflection layer formation step of forming a total reflection layer consisting of a first dielectric multilayer film on a surface of said first substrate of said joined body after performing said polishing step;
a reflection-prevention layer formation step of forming a reflection prevention layer consisting of a second dielectric multilayer film on a surface of said second substrate of the joined body; and
a segmentation step of obtaining a large number of terahertz-wave detection elements by cutting said joined body in which said total reflection layer and said reflection prevention layer have been formed, into pieces of a predetermined element size, wherein
in said joining step, said first substrate and said second substrate are joined together such that a thickness of a resin layer formed by thermosetting said adhesive becomes equal to or larger than 0.1 µm and equal to or smaller than 1 µm,
in said total-reflection layer formation step, said total reflection layer is formed in a thickness equal to or larger than 1 µm, and
a ratio of a thickness of said resin layer to a thickness of said total reflection layer is set equal to or smaller than 1/3.

6. A joined body formed by joining together a first substrate consisting of an electro-optic crystal and a second substrate that supports said electro-optic crystal by a resin layer consisting of a thermosetting resin, said joined body comprising:
a total reflection layer consisting of a first dielectric multilayer film, formed on a surface of said electro-optic crystal; and
a reflection prevention layer consisting of a second dielectric multilayer film, formed on a surface of said supporting substrate, wherein
a thickness of said resin layer is equal to or larger than 0.1 µm and equal to or smaller than 1 µm,
a thickness of said total reflection layer is equal to or larger than 1 µm, and
a ratio of a thickness of said resin layer to a thickness of said total reflection layer is equal to or smaller than 1/3.

7. An observation apparatus comprising a terahertz-wave detection element according to any of claims 1 to 4 such that a surface of a side of said electro-optic crystal layer is served as a mounting surface of a specimen, said observation apparatus comprising:
a terahertz-wave irradiation optical system that irradiates said terahertz wave toward said mounting surface on which said specimen is mounted;
a probe-light irradiation optical system that irradiates said probe light to said electro-optic crystal layer from said supporting substrate side; and
an observation optical system that observes an image of said probe light which has said spatial-characteristics distribution, said probe light being emitted from said electro-optic crystal layer in which a spatial distribution of said refractive index is generated by incidence of said terahertz wave.
